**Europäisches Patentamt**

**European Patent Office**

**Office européen des brevets**

(11) Veröffentlichungsnummer: **0 243 620**
**B1**

(12) **EUROPÄISCHE PATENTSCHRIFT**

(45) Veröffentlichungstag der Patentschrift:
14.06.89

(51) Int. Cl.⁴: **B60K 23/04**

(21) Anmeldenummer: 87103164.7

(22) Anmeldetag: 05.03.87

(54) Betätigungseinrichtung für eine Differentialsperre mit einem Stellglied.

(30) Priorität. 02.05.86 DE 3614863

(43) Veröffentlichungstag der Anmeldung:
04.11.87 Patentblatt 87/45

(45) Bekanntmachung des Hinweises auf die Patenterteilung:
14.06.89 Patentblatt 89/24

(84) Benannte Vertragsstaaten:
AT DE FR GB SE

(56) Entgegenhaltungen:
EP-A- 0 128 477
EP-A- 0 149 742

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Deike, Horst, Ing. (grad.), Peiner Landstrasse 5,
D-3161 Clauen (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Betätigungseinrichtungen für eine Differentialsperre gemäß den Oberbegriffen der Patentansprüche 1 und 10.

Eine Differentialsperre dient in der Fahrzeugtechnik zur Verbesserung der Vortriebsverhältnisse in dem Fall, daß wenigstens ein angetriebenes Rad durchdreht. In diesem Fall verbindet die Differentialsperre alle angetriebenen Räder oder die angetriebenen Räder einer Achse drehfest. Die Differentialsperre darf in der Regel, weil formschlüssig wirkend, während des Durchdrehens nicht in Sperrichtung betätigt werden, um Beschädigungen von Bauteilen der Differentialsperre und/oder der zu den Rädern führenden Antriebsorgane vermeiden. Andererseits darf die Differentialsperre in der Regel nicht länger als unbedingt erforderlich in der Sperrstellung verbleiben, da die erwähnte drehfeste Verbindung der angetriebenen Räder im normalen Fahrbetrieb Beschädigungen der genannten Bauteile zur Folge haben kann.

Betätigungseinrichtungen der eingangs erwähnten Arten sind in der nicht vorveröffentlichten deutschen Patentanmeldung P 35 43 894.0 beschrieben (die entsprechende DE-A1 3 543 894 wurde am 19.06.1987 ausgegeben und zählt daher nicht zum Stand der Technik gem. Art. 54(2) EPÜ). Dieses Dokument zeigt Stellglieder, denen als Energie der Druck eines Druckmittels dient. Gesteuert wird die Energiezufuhr durch eine Steuer- bzw. Sperrlogik, der an einem ersten Signaleingang ein beim Durchdrehen wenigstens eines Antriebsrades erzeugtes elektrisches radschlupfabhängiges Signal, nachstehend Radschlupfsignal, und an einen zweiten Signaleingang ein willkürlich erzeugtes Signal zugeführt werden. Voraussetzung für die Wirkung der bekannten Betätigungseinrichtungen ist, daß der Fahrer das willkürliche Signal erzeugt. Als Folge der Eingabe des willkürlichen Signals nimmt die Steuerlogik eine Bereitschaftstellung an, wenn bei der Eingabe und solange danach das Radschlupfsignal ansteht; sie geht aus der Bereitschaftsstellung in eine Wirkstellung über, in der sie Energie aussteuert, wenn das Radschlupfsignal nach Herstellung des Gleichlaufs der Antriebsräder (Synchronisation) verschwindet. Zum Lösen der Differentialsperre ist die willkürliche Aufhebung des zuvor eingegebenen willkürlichen Signals erforderlich.

Nachteilig ist an diesen bekannten Betätigungseinrichtungen, daß sie der Mitwirkung des Fahrers bedürfen. Dadurch hängen der sachgerechte Einsatz der Differentialsperre vom Vermögen des Fahrers, das Durchdrehen des wenigstens einen angetriebenen Rades warzunehmen, und das rechtzeitige Lösen der Differentialsperre zur Schonung der oben erwähnten Bauteile von der Aufmerksamkeit des Fahrers ab.

Der Erfindung liegt deshalb die Aufgabe zugrunde, Betätigungseinrichtungen der eingangs genannten Arten mit einfachen Mitteln so zu verbessern, daß sie fahrerunabhängig wirken.

Diese Aufgabe wird durch die in den Patentansprüchen 1 und 10 angegebene Erfindung gelöst. Weiterbildungen und vorteilhafte Ausgestaltungen sind in den Unteransprüchen angegeben.

Die Erfindung ist unabhängig von der Art der zum Stellen des Stellglieds eingesetzten Energie realisierbar. Insbesondere ist an ein elektrisch magnet-betätigtes oder ein druckmittelbetätigtes oder auch ein kombiniert betätigtes Stellglied zu denken. Unter "kombiniert betätig" kann beispielsweise ein druckmittelbetätigt und elektrisch rückgestelltes oder umgekehrt kombiniert betätigtes Stellglied verstanden werden.

Wo in den folgenden Ausführungen der Begriff "Radschlupfsignal" verwendet wird, schließt er in allgemeinerer Form ein radschlupfsignalabhängiges Signal ein. Als solches Signal kommt jedes beliebige geeignete Signal in Betracht, beispielsweise ein Beschleunigungssignal oder ein Drehzahldifferenzsignal oder ein Geschwindigkeitsdifferenzsignal.

Die Abschaltverzögerungszeit des Zeiglieds bzw. der Zeitglieder zur Anpassung an Einsatzverhältnisse und/oder an die Fahrzeugbauart kann voreingestellt oder einstellbar sein. Der Lauf der Abschaltverzögerung beginnt mit dem Abfall des Radschlupfsignals.

In vorteilhafter Weise kann die Erfindung mit einer Einrichtung zur radschlupfsignalabhängigen Synchronisation der Räder (Synchronisiereinrichtung), vereinigt sein.

Die Erfindung kann auch eine willkürlich betätigbare Ein- und/oder Abschaltvorrichtung enthalten. Als Einschaltvorrichtung kann in vorteilhafter Weise eine willkürlich betätigbare Einrichtung zur Erzeugung eines dem Radschlupfsignal entsprechenden Signals vorgesehen sein.

Auch läßt sich in die Erfindung eine Anzeigeeinrichtung für den Betätigungszustand (d. h. Löse- bzw. Sperrstellung) des Stellglieds integrieren.

Die Erfindung läßt sich mit Schalt- und Logikelementen jeder geeigneten Art ausführen. Insbesondere ist in diesem Zusammenhang an fluidische und/oder elektronische Bauelemente, aber auch an Bauelemente der herkömmlichen Schalt- und Relaistechnik zu denken.

Die Ausgestaltung nach dem Patentanspruch 1 kommt insbesondere in Verbindung mit einem selbstrückstellenden Stellglied, beispielsweise durch eine Rückstellfeder, in Betracht.

In dieser Ausgestaltung wird beim Auftreten des Radschlupfsignals an beide Signaleingänge der Steuerlogik ein Signal angelegt. Die Steuerlogik geht dadurch in eine Bereitschaftstellung. Aus dieser geht die Steuerlogik beim Abfall des Radschlupfsignals, also insbesondere wenn die der Differentialsperre zugeordneten Räder synchronisiert sind, in eine Wirkstellung über, in der sie Energie zum Stellglied aussteuert, welches dadurch aus seiner Lösestellung in seine Sperrstellung zum Einrücken der Differentialsperre gestellt wird. In der Wirkstellung verbleibt die Steuerlogik (und damit das Stellglied in Sperrstellung) bis zum Ablauf der Abschaltverzögerungszeit des Zeitglieds. Nach Ablauf dieser Zeit fällt auch das Signal am zweiten Signaleingang der Steuerlogik ab, woraufhin diese in ihre Grundstellung zurückgeht und das Stellglied zur Rückstellung in seine Lösestellung, beispielsweise durch seine Selbstrückstelleinrichtung, freigibt.

In Kurzform ausgedrückt, wird also durch die Erfindung die Differentialsperre als Folge des Radschlupfsignals, und zwar nach Abfall desselben, selbsttätig eingerückt und nach Zeitablauf des Zeitglieds gelöst.

Die soeben erwähnte Ausgestaltung der Erfindung läßt sich auf vielfältige Weise vorteilhaft weiterbilden.

In einer Ausbildung ist ein Positionssensor vorgesehen, dessen Stellungssignal abfällt, wenn das Stellglied eine vorbestimmte Stellung in Sperrrichtung erreicht. Diese Stellung kann beispielsweise erreicht sein, wenn das Stellglied seine Lösestellung verläßt. Werden das Stellungssignal und das Radschlupfsignal einem UND-Gatter und dessen Ausgangssignal als Radschlupfsignal der Steuerlogik an ihrem ersten Signaleingang zugeführt, so verhindert diese Ausbildung, wenn das Stellglied die erwähnte Stellung in Sperrrichtung erreicht hat, innerhalb der Abschaltverzögerungszeit des Zeitglieds eine Rückkehr der Steuerlogik in ihre Grundstellung und dadurch die Rückstellung des Stellglieds im Falle eines erneuten Radschlupfsignals.

Der soeben beschriebene Effekt wird auch erreicht, wenn der Positionssensor derart ausgebildet ist, daß er beim Erreichen der genannten Stellung durch das Stellglied ein Stellungssignal abgibt und wenn außerdem das Radschlupfsignal und das Stellungssignal einem Gatter zugeführt werden, dessen Ausgangssignal als Radschlupfsignal dem ersten Eingang der Steuerlogik zugeführt wird, wobei das Gatter derart ausgebildet ist, daß es bei anstehenden Stellungssignal kein Ausgangssignal abgibt.

Die Ausgestaltung nach dem Patentanspruch 10 kommt in Verbindung mit einem Stellglied in Betracht, welches nicht selbstrückstellend ausgebildet ist, sondern auch in Löserichtung der Differentialsperre durch Energiezufuhr gestellt wird. Die in diesem Fall vorgesehene Sperrlogik entspricht in ihrer Wirkung in Verbindung mit dem ersten Zeiglied der vorstehend erwähnten Steuerlogik in Verbindung mit dem Zeitglied. Die hier zusätzlich vorgesehene Löselogik nimmt ihre Wirkstellung, in der sie Energie zum Stellglied in dessen Löserichtung aussteuert, an, wenn sie nach Ablauf der Abschaltverzögerungszeit der - synchronen - Zeitglieder das Ausgangssignal des zweiten Zeitglieds erhält. Diese Ausgestaltung bewirkt also eine Energiebeaufschlagung des Stellglieds auch in Löserichtung und damit aktiv dessen Rückstellung.

In einer Weiterbildung dieser Ausgestaltung ist ein Positionssensor vorgesehen, der ein Stellungssignal abgibt, wenn das Stellglied seine Lösestellung verläßt. Wird dieses Stellungssignal einem UND-Gatter zugeführt, über welches der Löselogik das Ausgangssignal des zweiten Zeitglieds zugeführt wird, so stellt diese Weiterbildung sicher, daß die Energiezufuhr zum Stellglied in dessen Löserichtung unterbrochen wird, sobald dieses bei der Rückstellung seine Lösestellung erreicht. Dadurch ist das Stellglied im Normalbetrieb (d. h. bei gelöster Differentialsperre) nicht dauer-energiebelastet. Dadurch wird eine vereinfachte Ausbildung des Stellglieds ermöglicht.

In einer Weiterbildung, welche auch mit der soeben beschriebenen kombiniert werden kann, ist ein Positionssensor vorgesehen, der ein Sperrsignal abgibt, wenn das Stellglied seine Sperrstellung erreicht. Werden das Sperrsignal und das Radschlupfsignal einem ODER-Gatter und dessen Ausgangssignal als Radschlupfsignal dem ersten Signaleingang der Sperrlogik zugeführt, so ist eine Lösung geschaffen, die einerseits eine Energieentlastung des Stellglieds bei Erreichen der Sperrstellung besorgt und andererseits eine erneute Energiezufuhr in Sperrrichtung im Falle eines neuen Radschlupfsignals innerhalb der Abschältverzögerungszeit der Zeitglieder verhindert.

In kostengünstiger Weise können das erste und das zweite Zeitglied in einem Zeiglied mit einem direkten Ausgang (das ist ein Ausgang, an dem ein dem Eingangssignal gleichgerichtetes Signal abgegeben wird) und einem invertierenden Ausgang zusammengefaßt sein.

Die Erfindung wird nachstehend anhand von in Zeichnungen dargestellten Ausführungsbeispielen erläutert.

Es zeigen:

Fig. 1 eine Betätigungseinrichtung für eine Differentialsperre mit einem selbstrückstellenden Stellglied,

Fig. 2 eine andere Ausbildung der Betätigungseinrichtung nach Fig. 1,

Fig. 3 eine Betätigungseinrichtung für eine Differentialsperre mit in Sperrrichtung und in Löserichtung durch Energiezufuhr stellbarem Stellglied,

Fig. 4 eine Betätigungseinrichtung nach Fig. 1 in Relaistechnik mit einem druckmittelbetätigten Stellglied,

Fig. 5 eine andere Ausgestaltung der Betätigungseinrichtung nach Fig. 4,

Fig. 6 eine Betätigungseinrichtung nach Fig. 3 in Relaistechnik mit einem druckmittelbetätigten Stellglied,

Fig. 7 eine andere Ausbildung der Betätigungseinrichtung nach Fig. 6.

In den Figuren werden einheitlich für Elemente mit gleichen Funktionen gleiche Bezugszeichen, für Energieleitungen durchgezogene Linien und für Signal- bzw. Steuerleitungen strichpunktierte Linien verwendet.

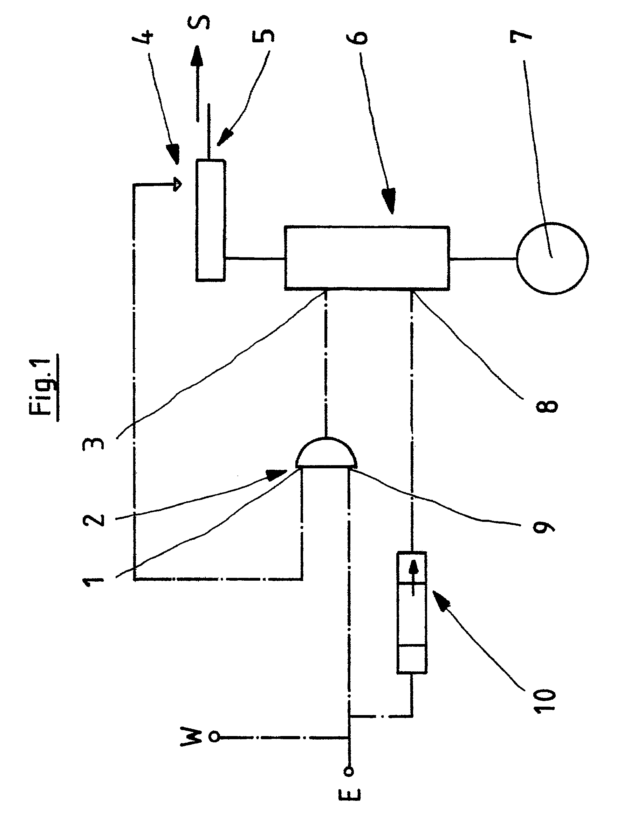

Fig. 1 zeigt schematisch eine Betätigungseinrichtung für eine Differentialsperre, welche ein Stellglied (5) aufweist, das in Sperrrichtung (Pfeil S) durch Energiezufuhr gestellt wird. Als Energie kommt jede geeignete Energie in Betracht, beispielsweise elektrische Energie oder der Druck eines Druckmittels. Das Stellglied (5) ist entsprechend der eingesetzten Energie ausgebildet, im Falle der elektrischen Energie beispielsweise magnetgesteuert, im Falle des Druckes als Kolbeneinheit eines Stellzylinders.

Zur Steuerung der Energiezufuhr aus einem mit (7) bezeichneten Energieerzeuger, der auch ein Energievorrat sein kann, ist eine Steuerlogik (6) in der Energieleitung zwischen dem Energieerzeuger (7) und dem Stellglied (5) angeordnet.

Die Steuerlogik (6) besitzt einen ersten Signaleingang (3) und einen zweiten Signaleingang (8). Am ersten Signaleingang (3) ist die Steuerlogik (6) mit dem nicht näher bezeichneten Ausgang eines UND-Gatters (2) verbunden, dessen erster Eingang (9) mit einem Radschlupfsignalgeber (E) und dessen zweiter Eingang (1) mit einem Positionssensor (4) verbunden ist. Der Positionssensor (4) überwacht die Stellung des Stellglieds (5) und gibt ein Dauersignal als Stellungssignal ab, welches abfällt, wenn das Stellglied (5) bei Bewegung in Sperrichtung (S) eine vorbestimmte Stellung erreicht.

Der Radschlupfsignalgeber (E) ist außerdem mit dem Eingang eines abschaltverzögerten Zeitglieds (10) verbunden, dessen Abschaltverzögerungszeit zur Anpassung an Einsatzverhältnisse und/oder an die Fahrzeugbauart voreingestellt ist oder einstellbar sein kann. Der Ausgang des Zeitglieds (10) ist mit dem zweiten Signaleingang (8) der Steuerlogik (6) verbunden.

Die Steuerlogik (6) ist derart ausgebildet, daß sie bei fehlenden Eingangssignalen eine Grundstellung, bei Beaufschlagung an beiden Signaleingängen (3 und 8) eine Bereitschaftsstellung und bei Beaufschlagung nur des zweiten Signaleingangs (8) eine Wirkstellung annimmt, in welcher sie Energie aussteuert.

Bei der weiteren Beschreibung der Wirkungsweise der dargestellten Betätigungseinrichtung sei zunächst angenommen, daß das UND-Gatter (2) und der Positionssensor (4) nicht vorhanden seien. Der Radschlupfsignalgeber (E) sei statt dessen direkt mit dem ersten Signaleingang (3) der Steuerlogik (6) verbunden. Diese Annahme ist zulässig, weil die fraglichen Positionen in der Grundausführung der Erfindung nicht erforderlich sind.

Im Normalbetrieb gibt der Radschlupfsignalgeber (E) kein Radschlupfsignal ab, so daß beide Signaleingänge (3 und 8) der Steuerlogik (6) entregt, die Signallogik (6) in Grundstellung, das Stellglied (5) in Lösestellung und die Differentialsperre gelöst sind.

Dreht nun wenigstens ein der dargestellten Betätigungseinrichtungen zugeordnetes angetriebenes Rad durch, so gibt der Radschlupfsignalgeber (E) ein Radschlupfsignal ab, welches als radschlupfabhängiges Signal dem ersten Signaleingang (3) der Steuerlogik (6) und dem Eingang des Zeitglieds (10) zugeführt wird. Das Zeitglied (10) gibt aufgrund des Radschlupfsignals ein Ausgangssignal an den zweiten Signaleingang (8) der Steuerlogik (6) ab. Da jetzt beide Signaleingänge (3 und 8) der Steuerlogik (6) erregt sind, nimmt die Steuerlogik (6) die oben erwähnte Bereitschaftsstellung an, in der das Stellglied (5) in seiner Lösestellung verbleibt.

Ist das durchdrehende Rad synchronisiert, was beispielsweise über eine nicht näher beschriebene radschlupfsignalabhängige Synchronisiereinrichtung gesteuert sein kann, fällt das Radschlupfsignal am Radschlupfsignalgeber (E) und am ersten Signaleingang (3) der Steuerlogik (6) sowie am Zeitglied (10) ab. Der erste Signaleingang (3) der Steuerlogik (6) ist nun entregt, während der zweite Signaleingang (8) infolge der Abschaltverzögerung des Zeitglieds (10) weiter erregt bleibt. Dadurch nimmt die Steuerlogik (6) ihre Wirkstellung an, in der sie Energie zum Stellglied (5) aussteuert; dieses wird durch die Energiezufuhr in Sperrichtung gestellt und rückt dabei die Differentialsperre ein. Die Steuerlogik (6) verbleibt in der Wirkstellung und hält dadurch die Energiezufuhr zum Stellglied (5) aufrecht, bis nach Ablauf der Abschaltverzögerungszeit des Zeitglieds (10) dessen Ausgangssignal abfällt. Dann sind beide Signaleingänge (3 und 8) der Steuerlogik (6) wieder entregt. Die Steuerlogik (6) kehrt dadurch in ihre Grundstellung zurück, wobei sie die Energiezufuhr zum Stellglied (5) unterbricht und dieses zur Rückstellung durch eine nicht näher beschriebene Selbstrückstelleinrichtung, beispielsweise eine Rückstellfeder, feigibt.

Zusammenfassend läßt sich die Wirkungsweise der beschriebenen Betätigungseinrichtung dahin beschreiben, daß sie die Differentialsperre als Folge des Radschlupfsignals selbsttätig einrückt und nach Zeitablauf des Zeitgliedes wieder löst.

Tritt bei der soeben in ihrer Wirkungsweise beschriebenen Grundausführung der Erfindung während der Abschaltverzögerungszeit des Zeitglieds (10) ein erneutes Radschlupfsignal auf, so geht infolgedessen die Steuerlogik (6) aus ihrer Wirkstellung in ihre Bereitschaftsstellung über mit dem Ergebnis, daß das Stellglied (5) in seine Lösestellung zurückgestellt wird. Ein erneutes Radschlupfsignal unterbricht also die Betätigung der Differentialsperre. Abhilfe hiergegen schafft das UND-Gatter (2) in Verbindung mit dem Positionssensor (4) Bei dieser Ausgestaltung kann der erste Signaleingang (3) der Steuerlogik (6) nur dann mit dem Ausgangssignal des UND-Gatters (2) als radschlupfabhängigem Signal beaufschlagt werden, wenn sowohl der Radschlupfsignalgeber (E) das Radschlupfsignal als auch der Positionssensor (4) das Stellungssignal abgeben. Das Stellungssignal existiert jedoch nicht mehr, wenn das Stellglied (5) bei Bewegung in Sperrichtung die oben erwähnte vorbestimmte Stellung erreicht hat. Mit anderen Worten: Hat das Stellglied (5) diese Stellung erreicht, sind das UND-Gatter (2) ausgangsseitig gesperrt und dadurch die Steuerlogik (6) bis zum Zeitablauf des Zeitglieds (10) in der Wirkstellung blockiert. In vielen Fällen wird es zweckmäßig sein, die erwähnte Stellung so festzulegen, daß sie schon erreicht ist, wenn das Stellglied seine Lösestellung verläßt.

Mit (W) ist noch eine willkürlich betätigbare Ein- und/oder Abschaltvorrichtung angedeutet, mittels der das Bedienungspersonal in den beschriebenen selbsttätigen Funktionsablauf der Betätigungseinrichtung eingreifen kann.

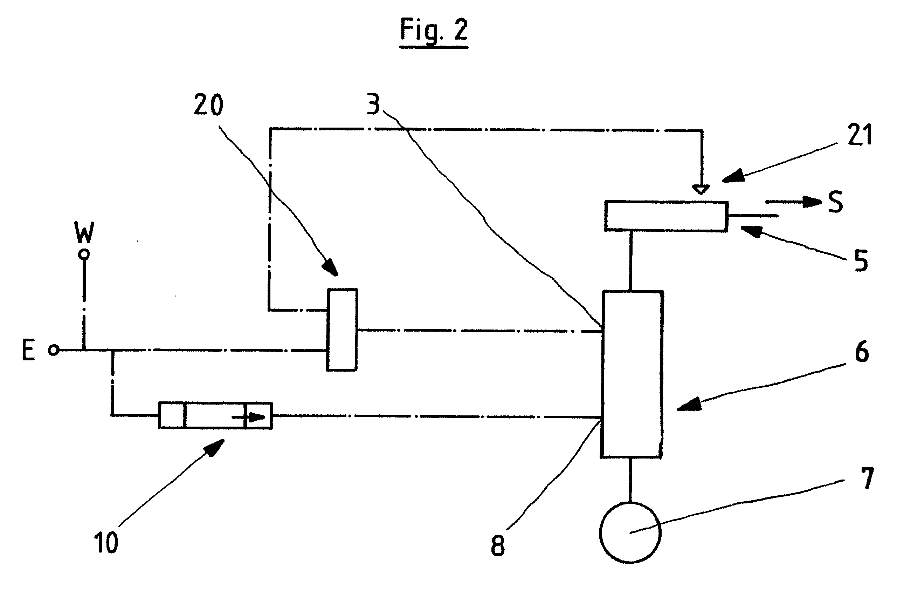

Das Ausführungsbeispiel nach Fig. 2 unterscheidet sich von dem vorhergehenden Ausführungsbeispiel lediglich dadurch, daß das UND-Gatter (2) und der Positionssensor (4) durch ein Gatter (20) und einen Positionssensor (21) ersetzt sind.

Der Positionssensor (21) überwacht wieder die Stellung des Stellglieds (5), ist aber so ausgebildet, daß er ein Stellungssignal abgibt, wenn das Stellglied (5) die bereits erwähnte vorbestimmte Stellung in Sperrichtung (S) erreicht. Das Gatter (20) ist eingangsseitig mit dem Positionssensor (21) und mit dem Radschlupfsignalgeber (E) verbunden. Das Gatter (20) ist derart ausgebildet, daß es bei anstehenden Stellungssignal kein Ausgangssignal als radschlupfabhängiges Signal abgeben kann. Das Gatter (20) dieses Ausführungsbeispiels wirkt also in Verbindung mit dem Positionssensor (21) wie das UND-Gatter (2) des vorherigen Ausführungsbeispieles.

Im übrigen gelten die zum vorherigen Ausführungsbeispiel gemachten Ausführungen auch für dieses Ausführungsbeispiel.

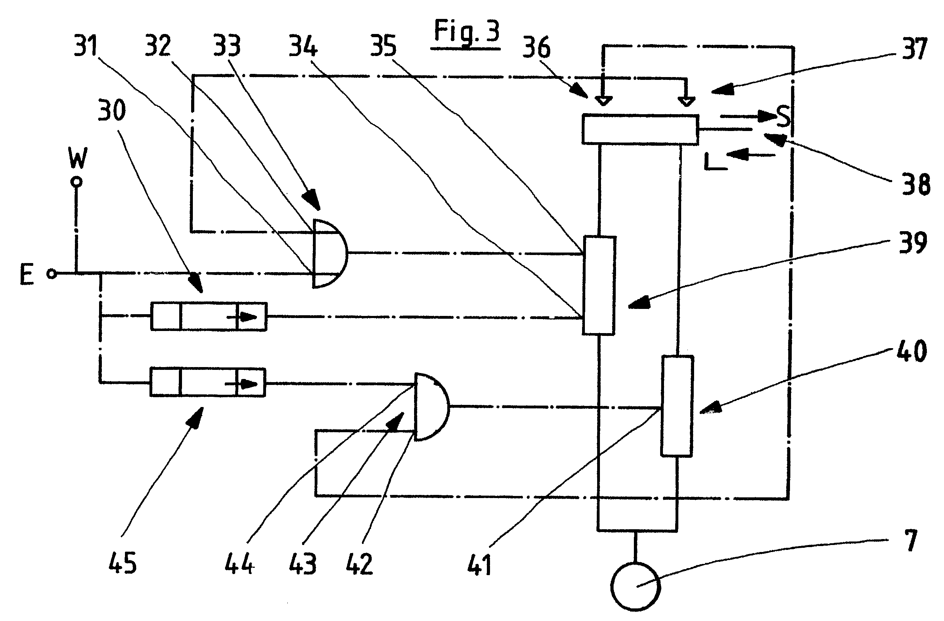

Fig. 3 zeigt schematisch eine Betätigungseinrichtung für eine Differentialsperre, welche ein Stellglied (38) aufweist, das in Sperrichtung (Pfeil S) und in Löserichtung (Pfeil L) der Differentialsperre durch Energiezufuhr gestellt wird. Der Einfachheit halber wird im folgenden für beide Betätigungsrichtungen die gleiche Energie zugrundegelegt. Es sind aber auch unterschiedliche Energiearten für die verschiedenen Bewegungsrichtungen einsetzbar.

Zur Steuerung der Energiezufuhr aus dem Energieerzeuger (7) sind in Energieleitungen zwischen dem Energieerzeuger (7) und dem Stellglied (38) in Sperrichtung (S) eine Sperrlogik (39) und in Löserichtung (L) eine Löselogik (40) angeordnet.

Die Sperrlogik (39) entspricht in ihrem Aufbau und in ihrer Wirkungsweise der Steuerlogik (2) des Ausführungsbeispiels nach Fig. 1.

An ihrem hier mit (35) bezeichneten ersten Signaleingang ist die Sperrlogik (39) mit dem nicht näher bezeichneten Ausgang eines ODER-Gatters (33) verbunden, dessen erster Eingang (31) mit dem Radschlupfsignalgeber (E) und dessen zweiter Eingang (32) mit einem Positionssensor (37) verbunden ist. Der Positionssensor (37) überwacht die Stellung des Stellglieds (38) und gibt ein Sperrsignal ab, wenn das Stellglied (38) seine Sperrstellung erreicht.

An ihrem hier mit (34) bezeichneten zweiten Signaleingang ist die Sperrlogik (39) mit dem nicht näher bezeichneten Ausgang eines ersten Zeitglieds (30) verbunden, welches in Aufbau und Wirkungsweise dem Zeitglied (10) des Ausführungsbeispiels nach Fig. 1 entspricht.

Die Löselogik (40) ist als JA-Gatter ausgebildet, d. h. sie steuert Energie aus, wenn sie an ihrem (einzigen) Signaleingang (41) erregt wird. An ihrem Signaleingang (41) ist die Löselogik (40) mit dem nicht näher bezeichneten Ausgang eines UND-Gatters (43) verbunden, dessen erster Eingang (44) mit dem nicht näher bezeichneten Ausgang eines zweiten abschaltverzögerten Zeitglieds (45) und dessen zweiter Eingang (42) mit einem Positionssensor (36) verbunden ist, der ein Stellungssignal abgibt, wenn das Stellglied (38) seine Lösestellung verläßt.

Das zweite Zeitglied (45) ist, wie das erste Zeitglied (30), eingangsseitig mit dem Radschlupfgeber (E) verbunden und mit diesem synchronisiert, wirkt jedoch invertierend, d. h. es gibt ein Ausgangssignal ab, wenn kein Radschlupfsignal vorhanden ist. Daraus folgt insbesondere, daß das zweite Zeitglied (45) nach Ablauf der Abschaltverzögerungszeit beider Zeitglieder (30 und 45) ein Ausgangssignal liefert.

Bei der Beschreibung der Wirkungsweise der vorliegenden Betätigungseinrichtung sei zunächst angenommen, daß das ODER-Gatter (33) und der Positionssensor (37) sowie das UND-Gatter (43) und der Positionssensor (36) nicht vorhanden seien. Entsprechend dem Ausführungsbeispiel nach Fig. 1 sei der Radschlupfsignalgeber (E) statt dessen direkt mit dem ersten Signaleingang (35) der Sperrlogik (39) verbunden. Außerdem sei der Ausgang des zweiten Zeitglieds (45) direkt mit dem Signaleingang (41) der Löselogik (40) verbunden. Mit diesen Annahmen ergibt sich auch für dieses Ausführungsbeispiel eine Grundausführung, für die die fraglichen Positionen nicht erforderlich sind.

Die Sperrlogik (39) wirkt in Verbindung mit dem ersten Zeitglied (30) in Sperrichtung (S) des Stellglieds (38) wie die Grundausführung des Ausführungsbeispiels nach Fig. 1.

Aufgrund der invertierenden Wirkung des zweiten Zeitgliedes (45) wird die Löselogik (40) an ihrem Signaleingang (41) immer gerade dann erregt bzw. entregt, wenn die Sperrlogik (39) an ihrem zweiten Signaleingang (34) entregt bzw. erregt ist. Im Ergebnis steuert die Löselogik (40) immer dann Energie zum Stellglied (38) in Löserichtung (1) aus, wenn die Sperrlogik (39) in ihrer Grund- oder Bereitschaftsstellung ist.

Mit anderen Worten: Im vorliegenden Ausführungsbeispiel sind die Sperrlogik (39) und die Löselogik (40) derart miteinander verknüpft, daß bei der Rückkehr der Sperrlogik (39) aus ihrer Wirkstellung das Stellglied (38) von der Löselogik (40) durch Energiezufuhr in Löserichtung (L) zurückgestellt wird.

Die Zusatzausrüstungen "ODER-Gatter (33) in Verbindung mit Positionssensor (37)" und "UND-Gatter (43) in Verbindung mit Positionssensor (36)" können der Grundausführung einzeln oder gemeinsam hinzugefügt werden.

Das ODER-Gatter (33) besorgt in Verbindung mit dem Positionssensor (37), daß der erste Signaleingang (35) der Sperrlogik (39) durch sein (des ODER-Gatters (33)) Ausgangssignal als radschlupfabhängiges Signal außer bei Abgabe eines Radschlupfsignals durch den Radschlupfsignalgeber (E) auch erregt wird durch die Stellung des Stellglieds (38) in seine Sperrstellung. Die Sperrlogik (39) kehrt infolgedessen nicht nur bei anstehendem Radschlupfsignal aus ihrer Wirkstellung in ihre Bereitschaftsstellung zurück, sondern tut dies auch beim Eintritt des Stellglieds (38) in seine Sperrstellung. Damit bietet diese Sonderausrüstung zwei Vorteile: Einserseits besorgt sie eine sofortige Energieentlastung des Stellglieds (38), wenn dies seine Sperrstellung erreicht, und ermöglicht dadurch eine Vereinfachung desselben; andererseits verhindert sie eine erneute Energiebeaufschlagung des in Sperrstellung befindlichen Stellglieds (38) in Sperrichtung (S), wenn sich innerhalb der Abschaltverzögerungszeit der Zeitglieder (30 und 45) das Radschlupfsignal wiederholt.

Das UND-Gatter (43) ist gesperrt, wenn sich das Stellglied (38) in seiner Lösestellung befindet, weil es dann von dem Positionssensor (36) kein Eingangssignal erhält. In diesem Zustand kann die Löselogik (40) an ihrem Signaleingang (41) kein Eingangssignal erhalten und folglich keine Energie zum Stellglied (38) in Löserichtung (L) aussteuern. Diese Sonderausrüstung bietet damit den Vorteil, daß im Normalbetrieb (Lösestellung) das Stellglied (38) nicht dauer-energiebelastet ist und deshalb vereinfacht ausgebildet sein kann.

In nicht dargestellter Weise können das erste Zeitglied (30) und das zweite Zeitglied (45) in einem Zeiglied mit einem direkten Ausgang wie weiter oben definiert und einem invertierenden Ausgang zusammengefaßt sein.

Im übrigen gelten für das vorliegende Ausführungsbeispiel alle zu den vorhergehenden Ausführungsbeispielen gemachten Ausführungen in entsprechender Weise.

Die vorstehend beschriebenen Ausführungsbeispiele lassen sich, entsprechend den weiter oben gemachten Angaben, mit Schalt- und Logikelementen jeder geeigneten Art ausführen.

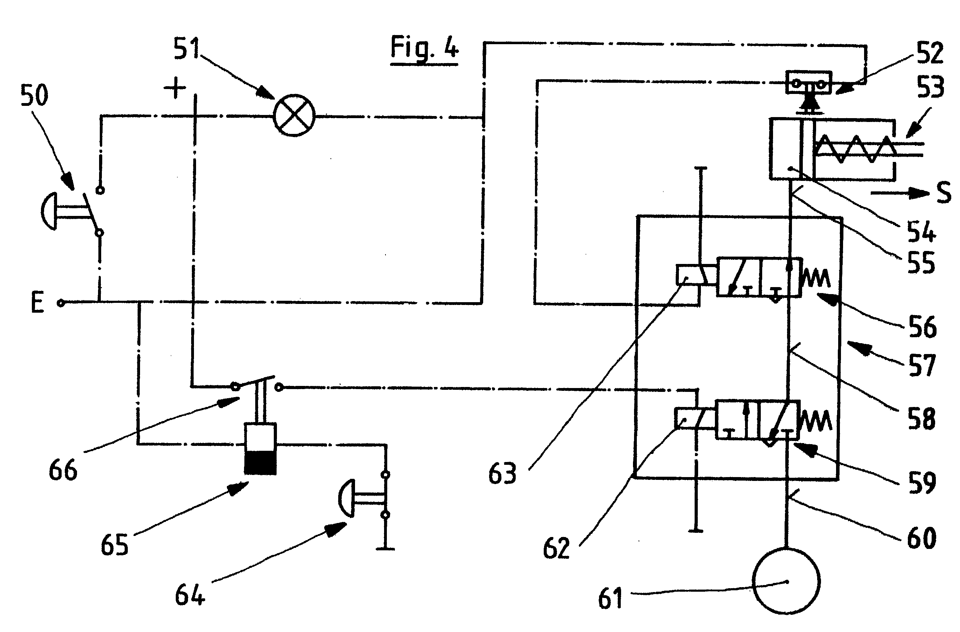

Das Ausführungsbeispiel nach Fig. 4 zeigt als Ausgestaltung des Ausführungsbeispiels nach Fig. 1 schematisch eine Betätigungseinrichtung für eine Differentialsperre, welche ein Stellglied (53) aufweist, welches durch Beaufschlagung einer Sperrkammer (54) mit Druck eines Druckmittels in Sperrichtung (S) stellbar ist. Als Energieerzeuger ist ein Druckmittelvorrat (61) vorgesehen, in dessen Druckmittelleitung (55, 58, 60) zur Sperrkammer (54) die in 3/2-Wegeventiltechnik ausgeführte Steuerlogik (57) angeordnet ist.

Die Rückstellung des Stellglieds (53) in Löserichtung bzw. -stellung erfolgt mittels einer zeichnerisch angedeuteten, jedoch nicht näher bezeichneten Rückstellfeder.

Die Steuerlogik (57) weist in der Druckmittelleitung (55, 58, 60) zwei in Reihe angeordnete magnetgesteuerte 3/2-Wegeventile (56, 59) auf, deren zweites (59) bei Erregung des zugeordneten Magneten (62) durchgängig und deren erstes, stromabwärts des zweiten 3/2-Wegeventils (59) gelegenes 3/2-Wegeventils (56) bei Erregung des zugeordneten Magneten (63) undurchgängig ist. Der Magnet (63) des ersten 3/2-Wegeventils (56) dient als erster Signaleingang, der Magnet (62) des zweiten 3/2-Wegeventils (59) dient als zweiter Signaleingang der Steuerlogik. Die Logikelemente sind in diesem Ausführungsbeispiel in herkömmlicher Schalt- und Relaistechnik ausgebildet.

Als abfallverzögertes Zeitglied dient ein abfallverzögertes Relais (65) mit Schließkontakt (66), dessen Wicklung mit dem Radschlupfsignalgeber (E) in Reihe und dessen Kontakt (66) mit dem Magneten (62) in dessen Erregerkreis in Reihe liegen.

Das dem Magneten (63) als erstem Signaleingang der Steuerlogik (57) vorgelagerte UND-Gatter wird von einem als Positionssensor im Sinne von Positionssensor (4) der Fig. 1 dienenden Ausschaltglied (52) und dem Radschlupfsignalgeber (E) gebildet, wobei der Radschlupfsignalgeber (E) und das Ausschaltglied (52) die Eingänge des UND-Gatters bilden.

Das Ausschaltglied (52) wird dabei von dem Stellglied (53) derart gesteuert, daß sein Kontakt geöffnet wird, wenn das Stellglied (53) die vorbestimmte Stellung in Sperrichtung (S) erreicht.

In der Grundstellung der Steuerlogik (57) sind beide Magnete (62 und 63) entregt. Da das dem Druckmittelvorrat (61) nächstgelegene zweite 3/2-Wegeventil (59) in diesem Zustand in Sperrstellung ist, sind dann der unmittelbar zur Sperrkammer (54) führende Teil (55) der Druckmittelleitung und damit auch die Sperrkammer (54) drucklos. Sind beide Magnete (62 und 63) erregt, sind das zweite 3/2-Wegeventil (59) in Durchgangsstellung, das erste 3/2-Wegeventil (56) in Sperrstellung und die Steuerlogik (57) in Bereitschaftsstellung, in der der Leitungsteil (55) und die Sperrkammer (54) drucklos bleiben. Erst wenn der Magnet (63) des ersten 3/2-Wegeventils (56) wieder entregt wird, kann der von dem zweiten 3/2-Wegeventil (59) ausgesteuerte Druck sich in den Leitungsteil (55) und damit in die Sperrkammer (54) fortpflanzen und das Stellglied (53) in Sperrichtung (S) stellen.

Die in der Beschreibung zu Fig. 1 erwähnte Grundausführung ergibt sich beim vorliegenden Ausführungsbeispiel, wenn das Ausschaltglied (52) entweder nicht vorhanden und die Signalleitung vom Radschlupfsignalgeber (E) zum Magneten (63) durchgeführt oder das Ausschaltglied (52) überbrückt sind.

Als zusätzliche Einrichtung zeigt das vorliegende Ausführungsbeispiel eine Anzeigeeinrichtung (51), die mit dem Ausschaltglied (52) in Reihe geschaltet ist und eine Überwachung der Funktion der Betätigungseinrichtung gestattet.

Mit (50 und 64) sind außerdem Schaltglieder angedeutet, die die Einrichtung (W) des Ausführungsbeispiels nach Fig. 1 realisieren und ein willkürliches Eingreifen des Bedienungspersonals in die Betätigungseinrichtung ermöglichen. Dabei ist das Schaltglied (50) als Einschaltglied ausgebildet, welches den Radschlupfsignalgeber (E) über einen Parallelstromkreis überbrückt. Das Schaltglied (64) ist als in Reihe mit der Wicklung des Relais (65) angeordnetes Ausschaltglied ausgebildet.

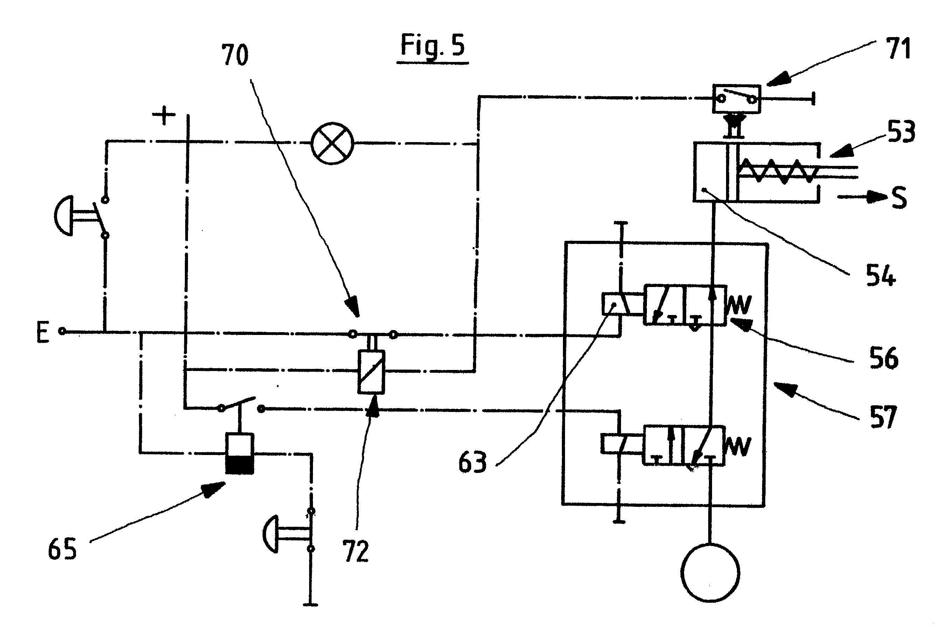

Fig. 5 zeigt das Ausführungsbeispiel nach Fig. 4 mit einer Ausbildung des Positionssensors und des Gatters entsprechend dem Ausführungsbeispiel nach Fig. 2.

Als Positionssensor dient in diesem Fall ein von dem Stellglied (53) gesteuertes Einschaltglied (71) mit einem Kontakt, der schließt, wenn das Stellglied (53) die vorbestimmte Stellung in Sperrichtung (S) erreicht. Das Gatter wird in diesem Fall dadurch gebildet, daß das Einschaltglied (71) mit der Wicklung eines Relais (72) mit Ausschaltkontakt (70) in Reihe liegt, dessen Kontakt (70) mit dem Radschlupfsignalgeber (E) und dem Magneten (63) des ersten 3/2-Wegeventils (56) in Reihe liegt.

Erreicht das Stellglied (53) die vorbestimmte Stellung in Sperrichtung, so wird über den sich schließenden Kontakt des Einschaltgliedes (71) die Wicklung des Relais (72) erregt und dessen Kontakt (70) geöffnet mit dem Ergebnis, daß der Magnet (63) nicht erregbar ist, sprich: das Gatter kein Ausgangssignal abgibt, und die Druckmittelbeaufschlagung der Sperrkammer (54) während des Zeitablaufs des Relais (65) durch ein erneutes Radschlupfsignal nicht unterbrochen werden kann.

Im übrigen gelten für dieses Ausführungsbeispiel die zum Ausführungsbeispiel nach Fig. 4 gemachten Ausführungen entsprechend.

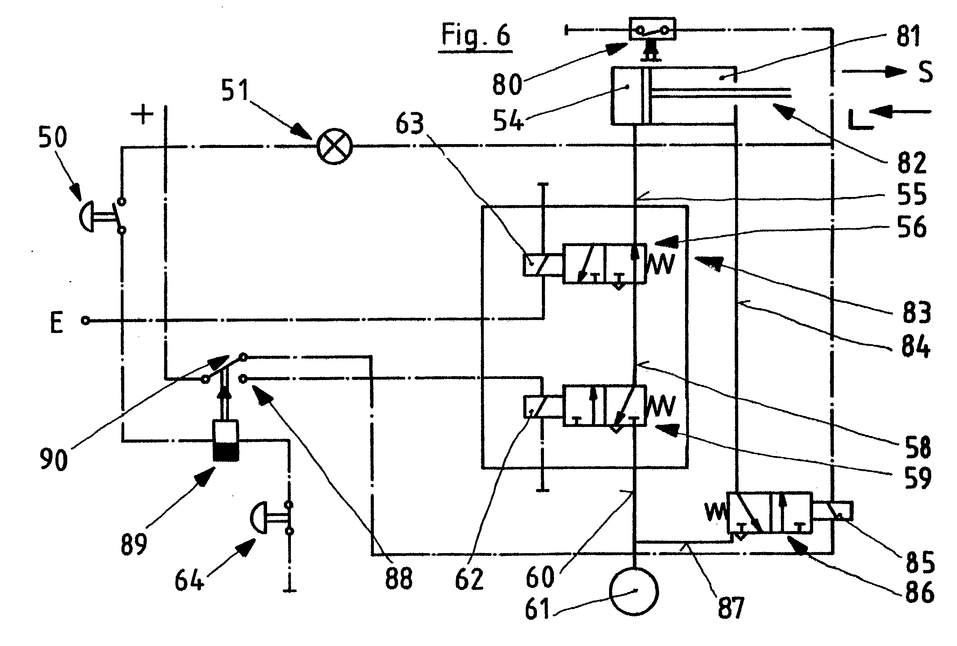

Fig. 6 zeigt als Ausgestaltung des Ausführungsbeispiels nach Fig. 3 schematisch eine Betätigungseinrichtung mit einem druckmittelbetätigten Stellglied (82), welches durch Druckbeaufschlagung einer Sperrkammer (54) in Sperrichtung (S) und einer Lösekammer (81) in Löserichtung (L) stellbar ist.

Wie oben gesagt, muß das Stellglied (82) nicht zwangsläufig in beiden Betätigungsrichtungen durch die gleiche Energieart stellbar sein.

In der wieder mit (55, 58, 60) bezeichneten Druckmittelleitung zwischen dem Druckmittelvorrat (61) und der wieder mit (54) bezeichneten Lösekammer ist eine Sperrlogik (83) angeordnet, die in Aufbau und Wirkungsweise mit der beim Ausführungsbeispiel nach Fig. 4 beschriebenen Steuerlogik (57) identisch ist.

Das als Löselogik dienende JA-Gatter ist als in einer Druckmittelleitung (84, 87) zwischen dem Druckmittelvorrat (61) und der Lösekammer (81) angeordnetes magnetgesteuertes 3/2-Wegeventil (86) ausgebildet, dessen Magnet (85) den Signaleingang der Löselogik darstellt. Das 3/2-Wegeventil (86) ist derart ausgebildet, daß es bei entregtem Magneten (85) den Durchgang der Druckmittelleitung (84, 87) sperrt und dadurch die Lösekammer (81) druckentlastet und bei erregtem Magneten (85) den genannten Durchgang öffnet und dadurch die Druckbeaufschlagung der Sperrkammer (81) ermöglicht.

Auch die Logikelemente dieses Ausführungsbeispiels sind in Schalt- und Relaistechnik ausgeführt.

Als abschaltverzögertes Zeitglied zeigt das vorliegende Ausführungsbeispiel ein abschaltverzögertes Relais (89) mit Ruhekontakt (90) und Arbeitskontakt (88), dessen Wicklung mit dem Radschlupfsignalgeber (E) in Reihe angeordnet ist. Der Ruhekontakt (90) stellt einen invertierenden Ausgang, der Arbeitskontakt (88) einen direkten Ausgang des Relais (89) bzw. Zeitglieds dar. Das Relais (89) vereinigt demzufolge in sich das erste und das zweite Zeitglied (30 und 45) des Ausführungsbeispiels nach Fig. 3.

Mit dem Ruhekontakt (90) liegt der Magnet (85) des 3/2-Wegeventils (86) in Reihe, während mit dem Arbeitskontakt (88) der Magnet (62) des zweiten 3/2-Wegeventils (59) der Sperrlogik (83) in Reihe liegt.

Aus der Darstellung und der Funktion des Relais (89) geht hervor, daß es beim Auftreten des Radschlupfsignals vom Ruhekontakt (90) auf den Arbeitskontakt (88) umschaltet, diese Schaltstellung bei Abfall des Radschlupfsignals bis zum Ablauf der Abschaltverzögerungszeit beibehält und dann vom Arbeitskontakt (88) auf den Ruhekontakt (90) zurückgeschaltet. Auf diese Weise erregt und entregt das Relais (89) radschlupfsignal- und zeitgesteuert abwechselnd den genannten Magneten der Sperrlogik (83) und den Magneten (85) des als Löselogik dienenden 3/2-Wegeventils (86) und stellt damit die beim Ausführungsbeispiel nach Fig. 3 beschriebene wesentlichen Funktionen der Zeitglieder (30 und 45) sicher.

Mit dem Magneten (85) in Reihe liegt noch ein von dem Stellglied (82) gesteuertes Einschaltglied (80), dessen Kontakt geschlossen wird, wenn das Stellglied (82) seine Lösestellung verläßt. Das Einschaltglied (80), der Magnet (85) und der Ruhekontakt (90) des abschaltverzögerten Relais (89) bilden das beim Ausführungsbeispiel nach Fig. 3 beschriebene UND-Gatter (43) in Verbindung mit dem Positionssensor (36).

Die beim Ausführungsbeispiel nach Fig. 3 erwähnte Grundausführung ergibt sich, wenn das Einschaltglied (80) als nicht vorhanden oder überbrückt angenommen wird.

In nicht dargestellter Weise kann das vorstehend erwähnte UND-Gatter auch dadurch gebildet werden, daß das Einschaltglied (80) mit der Wicklung eines zusätzlichen Relais und dem Ruhekontakt (90) des abschaltverzögerten Relais (89) in Reihe angeordnet wird, wobei der (Ausschalt-) Kontakt des zusätzlichen Relais parallel zu dessen Wicklung mit dem Magneten (85) des 3/2-Wegeventils (86) in Reihe liegt.

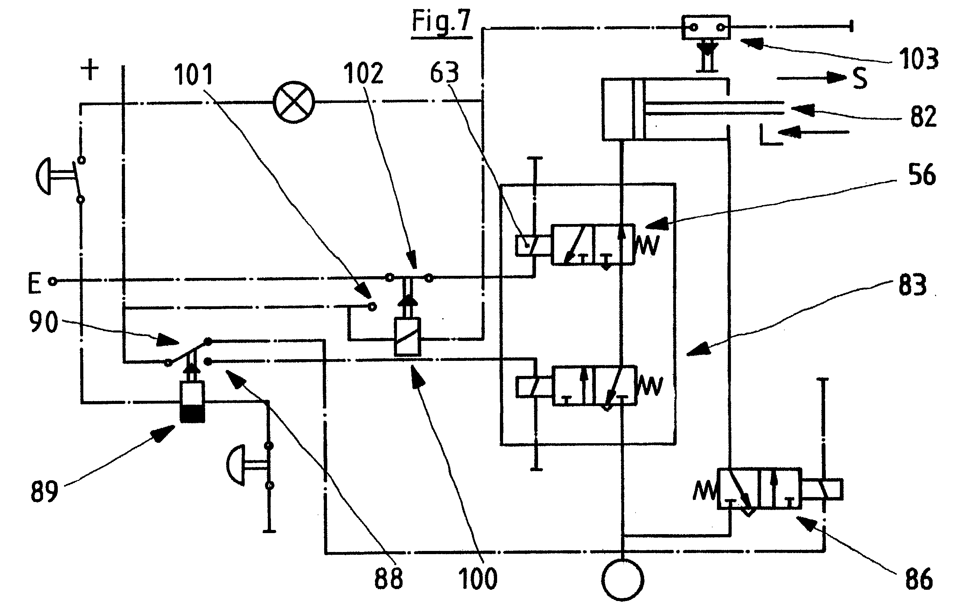

Fig. 7 zeigt eine andere Ausgestaltung des Ausführungsbeispiels nach Fig. 6, die mit jenem auch kombinierbar ist.

Anstelle des zur Bildung des UND-Gatters eingesetzten Einschaltgliedes (80) enthält das Ausführungsbeispiel nach Fig. 7 eine Ausgestaltung des beim Ausführungsbeispiel nach Fig. 3 erwähnten ODER-Gatters (dort (33)) mit dem zugehörigen Positionssensor (dort (37)).

Der Positionssensor ist als von dem Stellglied (82) gesteuertes Einschaltglied (103) ausgebildet, dessen Kontakt schließt, wenn das Stellglied (82) seine Sperrstellung erreicht.

Das ODER-Gatter ist als Relais (100) mit Ruhekontakt (102) und Arbeitskontakt (101) ausgebildet. Die Wicklung des Relais (100) liegt parallel zu den Kontakten (88 und 90) des abschaltverzögerten Relais (89) in Reihe mit dem Einschaltglied (103). Sein Arbeitskontakt (101) liegt parallel zu seiner Wicklung mit dem Magneten (63) der Sperrlogik (83) in Reihe, während sein Ruhekontakt (102) mit dem Radschlupfsignalgeber (E) und ebenfalls mit dem Magneten (63) in Reihe liegt.

Befindet sich das Stellglied (82)außerhalb seiner Sperrstellung, so sind der Kontakt des Einschaltglieds (103) geöffnet und die Wicklung des Relais (100) nicht erregt. Der Ruhekontakt (102) des Relais (100) ist hierbei geschlossen, so daß das Radschlupfsignal auf den Magneten (63) wirken und damit die Stellung der Sperrlogik (83) wie oben beschrieben beeinflussen kann. Erreicht jedoch das Stellglied (82) seine Sperrstellung, so schließt der Kontakt des Einschaltglieds (103). Die dadurch erregte Wicklung des Relais (100) schließt dessen Arbeitskontakt (101) und erregt dabei den Magneten (63) unabhängig von der Existenz des Radschlupfsignals. Auf diese Weise besorgt das Relais (100) in Verbindung mit dem Einschaltglied (103) die Erregung des Magneten (63) als erstem Signaleingang der Sperrlogik (83) durch das Radschlupfsignal oder das Schalten des Einschaltglieds (103) und stellt dabei die beim Ausführungsbeispiel nach Fig. 3 beschriebenen Vorteile der Zusatzausrüstung "ODER-Gatter ..." sicher.

Im übrigen gelten für die Ausführungsbeispiele nach den Fig. 6 und 7 die zu den Ausführungsbeispielen nach den Fig. 4 und 5 gemachten Ausführungen entsprechend.

Es liegt auf der Hand, daß die Löselogik und Sperrlogik sowie ihre einzelnen Bestandteile diskret oder für sich oder miteinander in zusammengebauter Form ausgeführt werden können.

Statt in der beschriebenen Schalt- und Relaistechnik können auch die Logikelemente der Ausführungsbeispiele nach den Fig. 4 bis 7 auf jede andere geeignete Weise, insbesondere mit elektronischen Bauelementen, ausgeführt werden.

Der Anwendungsbereich der Erfindung ist nicht auf die vorstehend beschriebenen Ausführungsbeispiele beschränkt. Er umfaßt vielmehr sämtliche Ausgestaltungen, die die Merkmale der Patentansprüche aufweisen.

## Patentansprüche

1. Betätigungseinrichtung für eine Differentialsperre, welche ein Stellglied (5, 53) aufweist, das in Sperrichtung der Differentialsperre durch Energiezufuhr gestellt wird, mit einer Steuerlogik (6, 57) zur Steuerung der Energiezufuhr, welche Steuerlogik (6, 57) zwei Signaleingänge (3, 8; 63, 62) aufweist, an deren erstem (3, 63) ihr ein radschlupfabhängiges Signal, nachstehend Radschlupfsignal, zuführbar ist, und die so ausgebildet ist, daß sie bei Beaufschlagung nur ihres zweiten Signaleingangs (8, 62) Energie zum Stellglied (5, 53) aussteuert, gekennzeichnet durch:
Es ist ein abschaltverzögertes Zeitglied (10, 65) vorgesehen, dem das Radschlupfsignal als Eingangssignal zugeführt wird und dessen Ausgangssignal dem zweiten Signaleingang (8, 62) der Steuerlogik (6, 57) zugeführt wird.

2. Betätigungseinrichtung nach Anspruch 1, gekennzeichnet durch:
a) Es ist ein Positionssensor (4, 52) vorgesehen, dessen Stellungssignal abfällt, wenn das Stellglied (5, 53) eine vorbestimmte Stellung in Sperrichtung (Pfeil S) erreicht;
b) das Radschlupfsignal wird der Steuerlogik (6, 57) als Ausgangssignal eines UND-Gatters (2; 52, E) zugeführt, dessen zweitem Eingang (1) das Stellungssignal zugeführt wird.

3. Betätigungseinrichtung nach Anspruch 1, gekennzeichnet durch:
a) Es ist ein Positionssensor (21, 71) vorgesehen, der ein Stellungssignal abgibt, wenn das Stellglied (5, 53) eine vorbestimmte Stellung in Sperrichtung (S) erreicht;
b) das Radschlupfsignal wird der Steuerlogik (6, 57) als Ausgangssignal eines Gatters (20) zugeführt, dessen zweitem Eingang das Stellungssignal zugeführt wird und welches Gatter (20) bei anstehendem Stellungssignal kein Ausgangssignal abgibt.

4. Betätigungseinrichtung nach einem der vorhergehenden Ansprüche, wobei als Energie der Druck eines Druckmittels dient und das Stellglied (53) durch Druckbeaufschlagung einer Sperrkammer (54) in Sperrichtung (Pfeil S) gestellt wird, dadurch gekennzeichnet, daß die Steuerlogik (57) folgende Merkmale aufweist:
a) In der Druckmittelleitung (55, 58, 60) zwischen einem Druckmittelvorrat (61) und der Sperrkammer (54) sind druckmittelseitig in Reihe zwei magnetgesteuerte 3/2-Wegeventile (56, 59) angeordnet, deren zweites (59) bei erregtem zugeordnetem Magneten (62) durchgängig und deren stromabwärts des zweten 3/2-Wegeventils (59) gelegenes erstes 3/2-Wegeventil (56) bei erregtem zugeordneten Magneten (63) undurchgängig ist;
b) der Magnet (63) des ersten 3/2-Wegeventils (56) dient als erster Signaleingang;
c) der Magnet (62) des zweiten 3/2-Wegeventils (59) dient als zweiter Signaleingang.

5. Betätigungseinrichtung nach einem der vorhergehenden Ansprüche, gekennzeichnet durch:
Als Zeitglied ist ein abfallverzögertes Relais (65) mit Schließkontakt (66) vorgesehen, dessen Wicklung mit dem Radschlupfsignalgeber (E) in Reihe liegt und dessen Kontakt (66) mit dem Magneten (62) des zweiten 3/2-Wegeventils (59) in dessen Erregerkreis in Reihe liegt.

6. Betätigungseinrichtung nach einem der Ansprüche 2 oder 4 bis 5, gekennzeichnet durch:
Der Positionssensor ist als von dem Stellglied (53) gesteuertes Ausschaltglied (52) ausgebildet.

7. Betätigungseinrichtung nach den Ansprüchen 2 und 6, gekennzeichnet durch:
Das UND-Gatter ist dadurch gebildet, daß das Ausschaltglied (52) mit dem Radschlupfsignalgeber (E) und dem Magneten (63) des ersten 3/2-Wegeventils (56) in Reihe angeordnet ist.

8. Betätigungseinrichtung nach einem der Ansprüche 3 bis 5, gekennzeichnet durch:
Der Positionssensor ist als von dem Stellglied (53) gesteuertes Einschaltglied (71) ausgebildet.

9. Betätigungseinrichtung nach den Ansprüchen 3 und 8, gekennzeichnet durch:
Das Gatter, dem das Radschlupfsignal und das Stellungssignal zugeführt werden und welches bei anstehendem Stellungssignal kein Ausgangssignal abgibt, ist dadurch gebildet, daß das Einschaltglied (71) mit der Wicklung eines Relais (72) mit Ausschaltkontakt in Reihe liegt, dessen Kontakt (70) mit dem Radschlupfsignalgeber (E) und dem Magneten (63) des ersten 3/2-Wegeventils (56) in Reihe liegt.

10. Betätigungseinrichtung für eine Differentialsperre, welche ein Stellglied (38, 82) aufweist, das in Sperrichtung und in Löserichtung der Differentialsperre durch Energiezufuhr stellbar ist, mit einer Sperrlogik (39, 83) zur Steuerung der Energiezufuhr in Sperrichtung, welche Sperrlogik (39, 83) zwei Signaleingänge (35, 34; 63, 62) aufweist, an deren erstem (35, 63) ihr ein radschlupfabhängiges Signal, nachstehend Radschlupfsignal, zuführbar ist und die so ausgebildet ist, daß sie bei Beaufschlagung nur ihres zweiten Signaleingangs (34, 62) Energie zum Stellglied (38, 82) aussteuert, gekennzeichnet durch:

a) Es ist eine die Energiezufuhr zum Stellglied (38, 82) in Löserichtung (Pfeil L) der Differentialsperre steuernde Löselogik (40, 86) mit einem Signaleingang (41, 85) vorgesehen, die bei Erhalt eines Fingangssignals Energie aussteuert;

b) das Radschlupfsignal wird einem abschaltverzögerten ersten Zeiglied (30) und einem mit dem ersten Zeitglied (30) synchronen invertierenden zweiten Zeitglied (45) zugeführt;

c) das Ausgangssignal des ersten Zeiglieds (30) wird dem zweiten Signalanschluß (34, 62) der Sperrlogik (39, 83) zugeführt;

d) das Ausgangssignal des zweiten Zeitglieds (45) wird dem Signaleingang (41, 85) der Löselogik (40, 86) zugeführt.

11. Betätigungseinrichtung nach Anspruch 10, gekennzeichnet durch:

a) Es ist ein Positionssensor (36, 80) vorgesehen, der ein Stellungssignal abgibt, wenn das Stellglied (38, 82) seine Lösestellung verläßt;

b) das Ausgangssignal des zweiten Zeiglieds (45) wird der Löselogik (40, 86) über ein UND-Gatter (43; 89, 90) zugeführt, dessen zweitem Eingang (42) das Stellungssignal zugeführt wird.

12. Betätigungseinrichtung nach einem der Ansprüche 10 oder 11, gekennzeichnet durch:

a) Es ist ein Positionssensor (37, 103) vorgesehen, der ein Sperrsignal abgibt, wenn das Stellglied (38, 82) seine Sperrstellung erreicht;

b) das Radschlupfsignal wird der Sperrlogik (39, 83) als Ausgangssignal eines ODER-Gatters (33, 100) zugeführt, dessen zweitem Eingang (32) das Sperrsignal zugeführt wird.

13. Betätigungseinrichtung nach einem der Ansprüche 10 bis 12, dadurch gekennzeichnet, daß das erste Zeitglied und das zweite Zeitglied in einem Zeitglied (89) mit einem direkten Ausgang (88) und einem invertierenden Ausgang (90) vereinigt sind.

14. Betätigungseinrichtung nach Anspruch 10, wobei als Energie der Druck eines Druckmittels dient und das Stellglied (82) durch Druckbeaufschlagung einer Sperrkammer (54) in Sperrichtung (Pfeil S) gestellt wird, dadurch gekennzeichnet, daß die Sperrlogik (83) folgende Merkmale aufweist:

a) In der Druckmittelleitung (55, 58, 60) zwischen einem Druckmittelvorrat (61) und der Sperrkammer (54) sind in Reihe zwei magnetgesteuerte 3/2-Wegeventile (56, 59) angeordnet, deren zweites (59) bei erregtem zugeoFdneten Magneten (62) durchgängig und deren stromabwärts des zweiten 3/2-Wegeventils (59) gelegenes erstes 3/2-Wegeventil (56) bei erregtem zugeordneten Magneten (63) undurchgängig ist;

b) der Magnet (63) des ersten 3/2-Wegeventils (56) dient als erster Signaleingang;

c) der Magnet (62) des zweiten 3/2-Wegeventils (59) dient als zweiter Signaleingang.

15. Betätigungseinrichtung nach Anspruch 10, wobei als Energie der Druck eines Druckmittels dient und das Stellglied (82) durch Druckbeaufschlagung einer Lösekammer (81) in Löserichtung (Pfeil L) stellbar ist, dadurch gekennzeichnet, daß die Löselogik (86) folgende Merkmale aufweist:

In der Druckmittelverbindung (84, 87) zwischen einem Druckmittelvorrat (61) und der Lösekammer (81) ist ein magnetgesteuertes 3/2-Wegeventil (86) angeordnet, welches bei erregten zugeordneten Magneten (85) durchgängig ist, wobei der Magnet (85) den Signaleingang der Löselogik bildet.

16. Betätigungseinrichtung nach einem der Ansprüche 13 bis 15, gekennzeichnet durch:

Das Zeitglied ist als abschaltverzögertes Relais (89) mit Ruhekontakt (90) und Arbeitskontakt (88) ausgebildet, dessen Wicklung mit dem Radschlupfsignalgeber (E) in Reihe angeordnet ist, wobei der Ruhekontakt (90) den invertierenden Ausgang bildet.

17. Betätigungseinrichtung nach einem der Ansprüche 11 bis 16, gekennzeichnet durch:

Der Positionssensor, der ein Stellungssignal abgibt, wenn das Stellglied (82) seine Lösestellung verläßt, ist als von dem Stellglied (82) gesteuertes Einschaltglied (80) ausgebildet.

18. Betätigungseinrichtung nach den Ansprüchen 11 und 17, gekennzeichnet durch:

Das UND-Gatter ist dadurch gebildet, daß das Einschaltglied (80), der Magnet (85) des 3/2-Wegeventils (86) und der Ruhekontakt (90) das abschaltverzögerten Relais (89) in Reihe angeordnet sind.

19. Betätigungseinrichtung nach den Ansprüchen 11 und 17, gekennzeichnet durch:

Das UND-Gatter ist dadurch gebildet, daß das Einschaltglied (80) mit der Wicklung eines zusätzlichen Relais und dem Ruhekontakt (90) des abschaltverzögerten Relais (89) in Reihe liegt, wobei der Ausschaltkontakt des zusätzlichen Relais parallel zu dessen Wicklung mit dem Magneten (85) des 3/2-Wegeventils (86) in Reihe liegt.

20. Betätigungseinrichtung nach einem der Ansprüche 12 bis 19, gekennzeichnet durch:

Der Positionssensor, der ein Sperrsignal abgibt, wenn das Stellglied (82) seine Sperrstellung erreicht, ist als von dem Stellglied (82) gesteuertes Einschaltglied (103) ausgebildet.

21. Betätigungseinrichtung nach den Ansprüchen 12 und 20, gekennzeichnet durch:

Das ODER-Gatter ist als Relais (100) mit Ruhekontakt (102) und Arbeitskontakt (101) ausgebildet, dessen Wicklung parallel zu den Kontakten des abschaltverzögerten Relais (89) in Reihe mit dem Einschaltglied (103) angeordnet ist, wobei sein Ruhekontakt (102) in Reihe mit dem Magneten (63) des 3/2-Wegeventils (56) und dem Radschlupfsignalgeber (E) und sein Arbeitskontakt (101) parallel zu seiner Wicklung in Reihe mit den Magneten (63) des 3/2-Wegeventils (56) liegen.

22. Betätigungseinrichtung nach einem der vorhergehenden Ansprürhe, gekennzeichnet durch:

Es ist eine von dem Positionssensor (4, 21, 36, 37) steuerbare bzw. von dem Ausschaltglied (52) bzw. von dem Einschaltglied (71, 80, 103) schaltbare Anzeigeeinrichtung (51) für die Löse- bzw. Sperrstellung des Stellglieds (5, 38, 53, 82) vorgesehen.

23. Betätigungseinrichtung nach einem der vorhergehenden Ansprüche, gekennzeichnet durch:

Es ist eine willkürlich betätigbare Einrichtung (W; 50) zur Erzeugung eines dem Radschlupfsignal entsprechenden Signals vorgesehen.

24. Betätigungseinrichtung nach Anspruch 23 und einem der Ansprüche 5 bis 9 oder 16 bis 23, gekennzeichnet durch:

Die willkürlich betätigbare Einrichtung zur Erzeugung eines dem Radschlupfsignal entsprechenden Signals ist als parallel zum Radschlupfsignalgeber (E) angeordnetes Einschaltglied (50) ausgebildet.

25. Betätigungseinrichtung nach einem der Ansprüche 5 bis 9 oder 16 bis 24, <u>gekennzeichnet durch:</u>

In Reihe mit der Wicklung des abschaltverzögerten Relais (89) ist ein willkürlich betätigbares Ausschaltglied (64) vorgesehen.

## Claims

1. An actuator for a differential locking device, which has a control element (5, 53) which is set for the locking direction of the differential locking device by supply of energy, with a control logic (6, 57) for controlling the energy supply, which control logic (6, 57) has two signal inputs (3, 8; 63, 62) to the first (3, 63) of which a wheel-slip-dependent signal, hereinafter referred to as the wheel-slip signal, may be fed, and which is so designed that when only its second signal input (8, 62) receives a signal it delivers energy to the control element (5, 52), characterized in that:
a timing element (10, 65) with switch-off delay is provided, to which the wheel-slip signal is fed as input signal and the output signal of which is fed to the second signal input (8, 62) of the control logic (6, 57).

2. An actuator according to claim 1, characterized in that
a) there is provided a position sensor (4, 52) the position signal of which decays when the control element (5, 53) reaches a predetermined position in the locking direction (arrow S);
b) the wheel-slip signal is fed to the control logic (6, 57) as output signal of an AND gate (2; 52, E), to the second input (1) of which the position signal is fed.

3. An actuator according to claim 1, characterized in that
a) there is provided a position sensor (21, 72) which delivers a position signal when the control element (5, 53) reaches a predetermined position in the locking direction (arrow S);
b) the wheel-slip signal is fed to the control logic (6, 57) as output signal of a gate (20), to the second input of which the position signal is fed and which gate (20) delivers no output signal when a position signal is present.

4. An actuator according to one of the preceding claims, wherein as energy the pressure of a pressure medium is used and the control element (53) is set by action of pressure in a locking chamber (54) for the locking direction (arrow S), characterized in that the control logic (57) has the following features:
a) in the pressure medium line (55, 58, 60) between a pressure medium reservoir (61) and the control chamber (54) there are arranged on the pressure medium side in series two magnet-controlled 3/2-way valves (56, 59), the second (59) of which is open when the associated magnet is energized and the first 3/2-way valve (56) positioned downstream of the second 3/2-way valve (59) is closed when the associated magnet (63) is energized;
b) the magnet (63) of the first 3/2-way valve (56) serves as first signal input;
c) the magnet (62) of the second 3/2-way valve (59) serves as second signal input.

5. An actuator according to one of the preceding claims, characterized in that as timing element there is provided a slow-release relay (65) with a normally open contact (66), the winding of which relay lies in series with the wheel-slip signal generator (E) and the contact (66) of which relay lies in series with the magnet (62) of the second 3/2-way valve (59) in the energizing circuit thereof.

6. An actuator according to one of claims 2 or 4 to 5, characterized in that the position sensor is constructed as a normally closed contact element (52) controlled by the control element (53).

7. An actuator according to claims 2 and 6, characterized in that the AND gate is formed in that the normally closed contact element (52) is arranged in series with the wheel-slip signal generator (E) and the magnet (63) of the first 3/2-way valve (56).

8. An actuator according to one of claims 3 to 5, characterized in that the position sensor is constructed as a normally open contact element (71) controlled by the control element (53).

9. An actuator according to claims 3 and 8, characterized in that the gate to which the wheel-slip signal and the position signal are supplied and which delivers no output signal in the presence of a position signal is formed in that the normally open contact element (71) lies in series with the winding of a relay (72) with a normally closed contact, the contact (70) of which relay lies in series with the wheel-slip signal generator (E) and the magnet (63) of the first 3/2-way valve (56).

10. An actuator for a differential locking device, which has a control element (38, 82) which can be set for the locking direction and for the release direction of the differential locking device by supply of energy, with a locking logic (39, 83) for controlling the energy supply in the locking direction, which locking logic (39, 83) has two signal inputs (35, 34; 63, 62), to the first (35, 63) of which a wheel-slip-dependent signal, hereinafter referred to as the wheel-slip-dependent signal, may be fed, and which is so designed that when only its second signal input (34, 62) receives a signal it delivers energy to the control element (38, 82), characterized in that:
a) a release logic (40, 86) controlling the supply of energy to the control element (38, 82) in the release direction (arrow L) of the differential locking device and having one signal input (41, 85) is provided, which delivers energy on receiving an input signal;
b) the wheel-slip signal is fed to a first timing element (30) with switch-off delay and to a second inverting timing element (45) synchronous with the first timing element (30);
c) the output signal of the first timing element (30) is fed to the second signal connection (34, 62) of the locking logic (39, 83);
d) the output signal of the second timing element (45) is fed ·to the signal input (41, 85) of the release logic (40, 86).

11. An actuator according to claim 10, characterized in that:

a) a position sensor (36, 80) is provided, which delivers a position signal whenever the control element (38, 82) leaves its release position;

b) the output signal of the second timing element (45) is fed to the release logic (40, 86) via an AND gate (43; 89, 90), to the second input (42) of which the position signal is fed.

12. An actuator according to one of claims 10 or 11, characterized in that:

a) a position sensor (37, 103) is provided, which delivers a locking signal whenever the control element (38, 82) reaches its locking position;

b) the weel-slip signal is fed to the locking logic (39, 83) as an output signal of an OR Gate (33, 100), to the second input (32) of which the locking signal is fed.

13. An actuator according to one of claims 10 to 12, characterized in that the first timing element and the second timing element are combined in one timing element (89) with one direct output (88) and one inverting output (90).

14. An actuator according to claim 10, wherein the pressure medium serves as energy, and the control element (82) is set for the locking direction (arrow S) by the action of pressure in a locking chamber (54), characterized in that the locking logic (83) has the following features:

a) in the pressure medium line (55, 58, 60) between a pressure medium reservoir (61) and the locking chamber (54) there are arranged in series two magnet-contrlled 3/2-way valves (56, 59), of which the second (59) is open when the associated magnet (62) is energized and of which the first 3/2-way valve (56) positioned downstream of the second 3/2-way valve (59) is closed when the associated magnet (63) is energized;

b) the magnet (63) of the first 3/2-way valve (56) serves as first signal input;

c) the magnet (62) of the second 3/2-way valve (59) serves as second signal input.

15. An actuator according to claim 10, wherein the pressure of a pressure medium serves as energy, and the control element (82) can be set for the release direction (arrow L) by the action of pressure in a release chamber (81), characterized in that the release logic (86) has the following features:

in the pressure medium line (84, 87) between a pressure medium reservoir (61) and the release chamber (81) there is arranged a magnet-controlled 3/2-way valve (86) which is open when the associated magnet (85) is energized, whereby the magnet (85) forms the signal input of the release logic.

16. An actuator according to one of claims 13 to 15, characterised in that: the timing element is constructed as a slow-release relay (89) with a normally closed contact (90) and a normally open contact (88), the winding of which relay is arranged in series with the wheel-slip signal generator (E), wherein the normally closed contact (90) forms the inverting output.

17. An actuator according to one of claims 11 to 16, characterised in that the position sensor, which delivers a position signal whenever the control element (82) leaves its release position, is constructed as a normally open contact element (80) controlled by the control element (82).

18. An actuator according to claims 11 and 17, characterized in that the AND gate is formed in that the normally open contact element (80), the magnet (85) of the 3/2-way valve (86) and the normally closed contact (90) of the slow-release relay (89) are arranged in series.

19. An actuator according to one of claims 11 and 17, characterized in that the AND gate is formed in that the normally open contact element (80) lies in series with the winding of an additional relay and with the normally closed contact (90) of the slow-release relay (89), wherein the normally closed contact of the additional relay lies parallel to the winding thereof in series with the magnet (85) of the 3/2-way valve (86).

20. An actuator according to one of claims 12 to 19, characterized in that the position sensor, which delivers a locking signal whenever the control element (82) reaches its locking position, is constructed as a normally open contact element (103) controlled by the control element (82).

21. An actuator according to one of claims 12 and 20, characterized in that the OR gate is constructed as a relay (100) with a normally closed contact (102) and a normally open contact (101), the winding of which relay is arranged parallel to the contacts of the slow-release relay (89) and in series with the normally open contact element (103), wherein its normally closed contact (102) lies in series with the magnet (63) of the 3/2-way valve (56) and the wheel-slip signal generator (E), and its normally open contact (101) lies parallel to its winding in series with the magnet (63) of the 3/2-way valve (56).

22. An actuator according to one of the preceding claims, characterized in that an indicating facility (51) for the release or locking position of the control element (5, 38, 53, 82) controllable by the position sensor (4, 21, 36, 37) or by the normally closed contact element (52) or by the normally open contact element (71, 80, 103) is provided.

23. An actuator according to one of the preciding claims, characterized in that an operator-controlled facility (W; 50) is provided to generate a signal corresponding to the wheel-slip signal.

24. An actuator according to claim 23 and to one of claims 5 to 9 or 16 to 23, characterized in that the operator-controlled facility for generating a signal corresponding to the wheel-slip signal is constructed as a normally open contact element (50) arranged parallel to the wheel-slip signal generator (E).

25. An actuator according to one of claims 5 to 9 or 16 to 24, characterized in that in series with the winding of the slow-release relay (89) there is provided an operator-controlled normally closed contact element (64).

**Revendications**

1. Dispositif de commande pour le blocage d'un différentiel, présentant un élément de manœuvre

(5, 53) qui est positionné dans la direction du blocage du différentiel par apport d'énergie, avec une logique de commande (6, 57) commandant l'apport d'énergie, laquelle logique de commande (6, 57) présente deux entrées de signal (3, 8; 63, 62), la première (3, 63) pouvant recevoir un signal dépendant du patinage d'une roue, ci-après signal de patinage de la roue, et est conçue de manière à fournir de l'énergie à l'élément de manœuvre (5, 53) lorsque seule sa seconde entrée de signal (8, 62) est excitée, caractérisé en ce qu'il est prévu un compteur de temps (10, 65) à temporisation de coupure auquel le signal de patinage de la roue est injecté comme signal d'entrée et dont le signal de sortie est envoyé à la seconde entrée de signal (8, 62) de la logique de commande (6, 57).

2. Dispositif de commande selon la revendication 1, caractérisé en ce que

   a) Il est prévu un capteur de position (4, 52) dont le signal de position retombe lorsque l'élément de manœuvre (5, 53) atteint une position prédéterminée dans la direction du blocage (flèche S);

   b) le signal de patinage de la roue appliqué à la logique de commande (6, 57) est le signal de sortie d'une porte ET (2; 52, E) dont la seconde entrée (1) reçoit le signal de position.

3. Dispositif de commande selon la revendication 1, caractérisé en ce que

   a) Il est prévu un capteur de position (21, 71) fournissant un signal de position lorsque l'élément de manœuvre (5, 53) atteint une position prédéterminée dans la direction du blocage (S);

   b) le signal de patinage de la roue injecté à la logique de commande (6, 57) est le signal de sortie d'une porte (20) dont la seconde entrée reçoit le signal de position, laquelle porte (20) ne fournit pas de signal de sortie en présence du signal de position.

4. Dispositif de commande selon l'une des revendications précédentes, où l'énergie utilisée est la pression d'un fluide sous pression et où l'élément de manœuvre (53) est déplacé dans le sens du blocage (flèche S) par l'application d'une pression à une chambre de blocage (54), caractérisé en ce que la logique de commande (57) présente les propriétés suivantes:

   a) Sur la conduite du fluide sous pression (55, 58 et 60) entre un réservoir de fluide sous pression (61) et la chambre de blocage (54), sont montées en série côté fluide sou pression deux vannes 3/2 voies à commande électromagnétique (56 et 59), dont la seconde (59) est passante lorsque la solénoïde (62) correspondant est excité et dont la première (56), placée en aval de la seconde vanne 3/2 voies (59), est fermée lorsque le solénoïde (63) correspondant est excité;

   b) le solénoïde (63) de la première vanne 3/2 voies (56) sert de première entrée de signal;

   c) le solénoïde (62) de la seconde vanne 3/2 voies (59) sert de seconde entrée de signal.

5. Dispositif de commande selon l'une des revendications précédentes, caractérisé en ce qu'il est prévu comme compteur de temps un relais à temporisation de coupure (65) avec contact de travail (66), dont le bobinage est monté en série avec le générateur de signal de patinage de la roue (E) et dont le contact (66) est monté en série avec le solénoïde (62) de la seconde vanne 3/2 voies (59) dans le circuit d'excitation de celle-ci.

6. Dispositif de commande selon l'une des revendications 2 ou 4 à 5, caractérisé en ce que le capteur de position est un élément de déclenchement (52) commandé par l'élément de manœuvre (53).

7. Dispositif de commande selon les revendications 2 et 6, caractérisé en ce que la porte ET est construite en montant en série l'élément de déclenchement (52) avec le générateur de signal de patinage de la roue (E) et le solénoïde (63) de la première vanne 3/2 voies (56).

8. Dispositif de commande selon l'une des revendications 3 à 5, caractérisé en ce que le capteur de position est constitué d'un élément d'enclenchement (71) commandé par l'élément de manœuvre (53).

9. Dispositif de commande selon les revendications 3 et 8, caractérisé en ce que la porte à laquelle sont injectés le signal de patinage de la roue et le signal de position et ne fournissant pas de signal de sortie en présence du signal de position est construite en montant l'élément d'enclenchement (71) en série avec le bobinage d'un relais (72) à contact de repos, dont le contact (70) est monté en série avec le générateur de signal de patinage de la roue (E) et le solénoïde (63) de la première vanne 3/2 voies (56).

10. Dispositif de commande pour le blocage d'un différentiel, présentant un élément de manœuvre (38, 82) qui est positionné dans la direction du blocage et du dégagement du différentiel par apport d'énergie, avec une logique de blocage (39, 83) commandant l'apport d'énergie dans la direction du blocage (39, 83), laquelle logique de blocage (39, 83) présente deux entrées de signal (35, 34; 63, 62), la première (35, 63) pouvant recevoir un signal dépendant du patinage d'une roue, ci-après signal de patinage de la roue, et est conçue de manière à fournit de l'énergie à l'élément de manœuvre (38, 82) lorsque seule sa seconde entrée de signal (34, 62) est excitée, caractérisé en ce que

   a) Il est prévu une logique de dégagement (40, 86) commandant l'apport d'énergie à l'élément de manœuvre (38, 82) dans le sens de dégagement (flèche L) du différentiel, et dotée d'une entrée de signal (41, 85) qui applique l'énergie en présence d'un signal d'entrée;

   b) le signal de patinage de la roue est injectée à un premier compteur de temps (30) à temporisation de coupure et à un second compteur de temps (45) inverseur, synchronisé au premier compteur de temps (30);

   c) le signal de sortie du premier compteur de temps (30) est injecté à la seconde entrée de signal (34, 62) de la logique de blocage (39, 83);

   d) le signal de sortie du second compteur de temps (45) est injecté à l'entrée de signal (41, 85) de la logique de dégagement (40, 86).

11. Dispositif de commande selon la revendication 10, caractéisé en ce que

   a) Il est prévu un capteur de position (36, 80) fournissant un signal de position lorsque l'élément de manœuvre (38, 82) quitte sa position de repos;

b) le signal de sortie su second compteur de temps (45) est envoyé à la logique de dégagement (40, 86) par une porte ET (43; 89, 90) dont la seconde entrée (42) reçoit le signal de position.

12. Dispositif de commande selon une des revendications 10 ou 11, caractérisé en ce que

a) Il est prévu un capteur de position (37, 103) fournissant un signal de position lorsque l'élément de manœuvre (38, 82) atteint sa position de blocage;

b) le signal de patinage de la roue injecté à la logique de commande (39, 83) est le signal de sortie d'une porte OU (33, 100) dont la seconde entrée (32) reçoit le signal de blocage.

13. Dispositif de commande selon l'une des revendications 10 à 12, caractérisé en ce que le premier compteur de temps et le second compteur de temps sont réunis en un compteur de temps (89) possédant une sortie directe (88) et une sortie inverseuse (90).

14. Dispositif de commande selon la revendication 10, où l'énergie utilisée est la pression d'un fluide sous pression et où l'élément de manœuvre (82) est déplacé dans le sens du blocage (flèche S) par l'application d'une pression à une chambre de blocage (54), caractérisé en ce que la logique de commande (83) présente les propriétés suivantes:

a) Sur la conduite du fluide sous pression (55, 58 et 60) entre un réservoir de fluide sous pression (61) et la chambre de blocage (54), sont montées en série deux vannes 3/2 voies à commande électromagnétique (56 et 59), dont la seconde (59) est passante lorsque le solénoïde (62) correspondant est excité et dont la première (56), placée en aval de la seconde vanne 3/2 voies (59), est fermée lorsque le solénoïde (63) correspondant est excité;

b) le solénoïde (63) de la première vanne 3/2 voies (56) sert de première entrée de signal:

c) solénoïde (62) de la seconde vanne 3/2 voies (59) sert de seconde entrée de signal.

15. Dispositif de commande selon la revendication 10, où l'énergie utilisée est la pression d'un fluide sous pression et où l'élément de manœuvre (82) est déplacé dans le sens du dégagement (flèche L) par l'application d'une pression à une chambre de dégagement (81), caractérisé en ce que la logique de dégagement (6) présente les propriétés suivantes:

Sur la conduite du fluide sous pression (55, 58 et 60) entre un réservoir de fluide sous pression (61) et la chambre de dégagement (81) est montée une vanne 3/2 voies à commande électromagnétique (86) qui est passante lorsque le solénoïde (85) correspondant est excité, le solénoïde (85) constituant ainsi l'entrée de signal de la logique de dégagement.

16. Dispositif de commande selon l'une des revendications 13 à 15, caractérisé en ce qu'il est prévu comme compteur de temps un relais à temporisation de coupure (89) avec contact de repos (90) et contact de travail (88), dont le bobinage est monté en série avec le générateur de signal de patinage de la roue (E) et dont le contact de repos (90) constitue la sortie inverseuse.

17. Dispositif de commande selon l'une des revendications 11 à 16, caractérisé en ce que le capteur de position fournissant un signal de position lorsque l'élément de manœuvre (82) quittee sa position de repos, est réalisé sous la forme d'un élément d'enclenchement (80) commandé par l'élément de manœuvre (82).

18. Dispositif de commande selon les revendications 11 et 17, cractérisé en ce que la porte ET est construite en montant en série l'élémet d'enclenchement (80), le solénoïde (85) de la vanne 3/2 voies (86) et le contact de repos (90) du relais à temporisation de coupure (89).

19. Dispositif de commande selon les revendications 11 et 17, caractérisé en ce que la porte ET est construite en montant en série l'élément d'enclenchement (80) avec le bobinage d'un relais supplémentaire et le contact de repos (90) du relais à temporisation de coupure (89), le contact de déclenchement du relais supplémentaire étant monté en parallèle avec le bobinage et en série avec le solénoïde (85) de la vanne 3/2 voies (86).

20. Dispositif de commande selon l'une des revendications 12 à 19, caractérisé en ce que le capteur de position fournissant le signal de blocage lorsque l'élément de manœuvre (82) a atteint sa position de blocage es constitué d'un élément d'enclenchement (103) commandé par l'élément de manœuvre (82).

21. Dispositif de commande selon les revendications 12 et 20, cractérisé en ce que la porte OU est constituée du relais (100) avec contact de repos (102) et contact de travail (101), dont le bobinage est monté en parallèle avec les contacts du relais à temporisation de coupure (89) et en série avec l'élément d'enclenchement (103), le contact de repos (102) étant monté en série avec le solénoïde (63) de la vanne 3/2 (56) et le générateur de signal de patinage de la roue (E) et le contact de travail (101) en parallèle avec le bobinage et en série avec le solénoïde (63) de la vanne 3/2 voies (56).

22. Dispositif de commande selon l'une des revendications précédentes, caractérisé en ce qu'il est prévu un dispositif d'affichage (51) de la position de blocage ou de repos de l'élément de manœuvre (5, 38, 53, 82) pouvant être commandé par le capteur de position (4, 21, 36, 37) ou commuté par l'élément de déclenchement (52) ou par l'élément d'enclenchement (71, 80, 103).

23. Dispositif de commande selon l'une des revendications précédentes, caractérisé en ce qu'il est prévu un dispositif actionnable aléatoirement (W; 50) produisant un signal correspondant au signal de patinage de la roue.

24. Dispositif selon la revendication 23 et l'une des revendications 5 à 9 ou 16 à 23, caractérisé en ce que le dispositif actionnable aléatoirement qui produit le signal correspondant au signal de patinage de la roue est conçu comme un élément d'enclenchement (50) monté en parallèle avec le générateur de signal de patinage de la roue (E).

25. Dispositif de commande selon l'une des revendications 5 à 9 ou 16 à 24, caractérisé en ce qu'il est prévu en série avec le bobinage du relais à temporisationde coupure (89) un élément de déclenchement (64) actionnable aléatoirement.

Fig.1

EP 0 243 620 B1

Fig. 2

Fig. 3

EP 0 243 620 B1

Fig. 4

Fig. 5

EP 0 243 620 B1

Fig. 6

Fig.7